# EUROPEAN PATENT APPLICATION

(11) **EP 4 843 737 A1**
(43) Date of publication of application: **25.11.2026**
(21) Application number: 25177345.3
(22) Date of filing: 19.05.2025
(51) Int. Cl.: B29B 17/02, B29K 101/10, B29K 105/08

(54) **FIBER RECOVERY FROM THERMOSET COMPOSITE MATERIALS**

(71) Applicant: Nederlandse Organisatie voor toegepast- natuurwetenschappelijk onderzoek TNO, 2595 DA 's-Gravenhage (NL)
(72) Inventor: VAN DE MOOSDIJK, Johannes Henricus Wilhelmus, 2595 DA 's-Gravenhage (NL); ROELANDS, Cornelis Petrus Marcus, 2595 DA 's-Gravenhage (NL); VAN DE RUNSTRAAT, Annemieke, 2595 DA 's-Gravenhage (NL); SVAVARSSON, Styrmir, 2595 DA 's-Gravenhage (NL); VAN SOMEREN, Rudolf Gijsbertus, 2595 DA 's-Gravenhage (NL); CUYPERS, Ruud, 2595 DA 's-Gravenhage (NL); PRINS, Lucie, 2595 DA 's-Gravenhage (NL)
(74) Representative: V.O.

(57) **Abstract**

The disclosure is directed to a method for recovering fibers from a fiber-reinforced thermoset composite material that comprises resin and fibers, said method comprising:
- subjecting the fiber-reinforced thermoset composite material to a high voltage fragmentation (HVF) to microfracture the fiber-reinforced thermoset composite material and obtain a microfractured fiber-reinforced thermoset composite; and
- subjecting the microfractured fiber-reinforced thermoset composite to solvolysis to at least partially dissolve the resin and liberate the fibers from said resin.

## Description

### FIELD

The invention is directed to recycling of fiber-reinforced thermoset composite materials. In particular, the invention is directed to a method for recovering the fibers from such materials.

### BACKGROUND

Fiber-reinforced thermoset composite materials, also known as fiber-reinforced plastics, are composite materials made of a polymer matrix reinforced with fibers.

Recovering polymer from fiber-reinforced plastics can be challenging, as the composite material has very good mechanical properties with respect to strength, durability, etc. Their properties make it challenging to separate and recover the fibers from the polymer. Various techniques are known for recovering the polymer from fiber-reinforced plastic, such as biotechnological, mechanical degradation, dissolution (solvolysis), electrochemical, pyrolysis, microwave pyrolysis or a combination of some these techniques.

The recovery of fibers by solvolysis is for example described in US20190241697A1 and WO2017171753A1. US2022363863A1 describes a method for recovering and reusing amine/epoxy-based composites comprising steps of degrading a target epoxy to form matrix residues, collecting the polymeric matrix residues, and adding the polymeric matrix residues into a polymer-forming formulation. Specifically, the target epoxy is pre-treated in benzyl alcohol to form a permeabilized composite which is then oxidatively degraded to form matrix residues. The matrix residues are collected and adding into a polymer-forming formulation. WO2017171753A1 describes processing fiber-reinforced composite to recover reinforcing fibers that includes first treating the composite with a normally-liquid first solvent for material of the matrix followed by second treating of solid residue including reinforcing fibers from the first treating with a normally-gaseous material contacted with the solid residue under conditions of temperature and pressure at which the normally-gaseous material is in a liquid or supercritical fluid form.

Navarro et al., Topics in Catalysis (2018) 61:704-709, describe mechanism and catalysis of solvolysis of fiber-reinforced epoxy composites that is based on oxidative degradation. The fiber-reinforced epoxy composites are treated by with acetic acid and 30% hydrogen peroxide, reaching completion in as few as 6 h. These conditions are considered to be too acidic and oxidative to allow molecule re-isolation, but fibers of high quality could be recovered.

A disadvantage of these solvolysis procedures is that they require long process times, in particular for larger and more bulky objects that are to be treated.

Examples of recovery by a combination of mechanical degradation and solvolysis are described in e.g. JP2020011482A and EP4257254A1. JP2020011482A describes a method for recycling a composite material such as a carbon fiber reinforced plastic. The method comprises cutting the composite material and crushing the cut pieces. Subsequently, the crushed pieces are subjected to a dissolution method wherein the organic material is decomposed by an organic liquid. EP4257254A1 provides a reactor wherein the fiber-reinforced material can be pressed and the resin (*i.e.* the polymer) is dissolved.

A disadvantage of such mechanical degradation is that the fibers in the material will degrade, which reduces the quality of the fibers. In particular, these techniques result in the length of the fibers being decreased.

US2012132732 describes a method by pulsed power, wherein series of electrical discharges are generated between at least two electrodes that generate a mechanical shockwave which is used to fragment objects. Mativenga et al., CIRP Annals - Manufacturing Technology 65 (2016) 45-48, describe a similar method, calling it high voltage fragmentation (HVF), to recycle glass fiber thermoset composite. The HVF uses repetitive pulse electrical discharges within a dielectric liquid environment, normally water, to disintegrate solid material. The described method leads to recyclates in forms of short fibers, flakes and powdered fractions, *i.e.* the material is degraded, and the quality of the fibers is greatly reduced.

Hence, there remain a need to provide a method to recover and recycle fiber-reinforced plastic that is rapid and provides high-quality fibers.

### SUMMARY

It is an object of the invention to provide a method to recover and recycle fibers from fiber-reinforced thermoset composite material, which method is both rapid and providing high-quality fibers. This latter requirement means in particular that the fibers remain long and are not shorted or otherwise degraded by the recovery method.

The present inventors surprisingly found that this object can be met by using a mild high voltage fragmentation (HVF) in combination with solvolysis. The mild HVF was found to microfracture, *i.e.* induce microcracks in, the fiber-reinforced thermoset composite material allowing a solvolysis medium to penetrate the material more easily, leading to a more rapid solvolysis without negatively affecting the quality of the fibers. The microcracks are large enough to allow a solvolysis medium to penetrate the material, but small enough not to damage the fibers. For example, the microcracks are typically less than 0.5 mm wide, *e.g.* less 0.1 mm wide.

Accordingly, an aspect of the invention is directed to a method for recovering fibers from a fiber-reinforced thermoset composite material that comprises resin and fibers, said method comprising:
- subjecting the fiber-reinforced thermoset composite material to a high voltage fragmentation (HVF) to obtain a microfractured fiber-reinforced thermoset composite; and
- subjecting the microfractured fiber-reinforced thermoset composite to solvolysis to at least partially decompose the resin and liberate the fibers from said resin.

### FIGURES

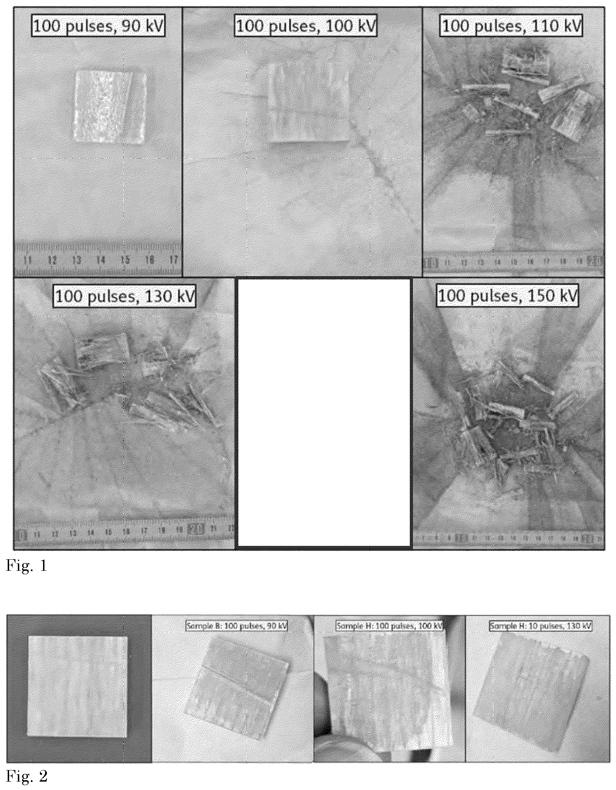

Figures 1-4 show exemplary composite materials after treatment.

### DETAILED DESCRIPTION

An aspect of the present invention is directed to a method for recovering fibers from a fiber-reinforced thermoset composite material that comprises resin and fibers, said method comprising:
- subjecting the fiber-reinforced thermoset composite material to a high voltage fragmentation (HVF) to obtain a microfractured fiber-reinforced thermoset composite; and
- subjecting the microfractured fiber-reinforced thermoset composite to solvolysis to at least partially dissolve the resin and liberate the fibers from said resin.

### Fiber-reinforced thermoset composite material

Fiber-reinforced thermoset composite material (herein also referred to as composites) comprises resin and fibers. The resin is also referred to as the polymer matrix or plastic material that envelope and bind the fibers. An overview of known composites can be found in Mallick, P.K. (2007) Fiber-Reinforced Composites: Materials, Manufacturing, and Design, Third Edition (3rd ed.). CRC Press, which is incorporated herein in its entirety.

Advantageously, the present method is suitable for the treatment of composites based on a variety of resins. As described in detail below, the solvolysis can be appropriately adjusted depending on the resin that is present in the composite. Known resins for composites that can be treated in the present method include epoxy resins, polyurethane resins, carbonate resins, vinyl ester resins, polyimide resins such as bismaleimide resins, polyester resins such as unsaturated polyester resins, and combinations thereof. The present method is particularly suitable for treating composites comprising epoxy resin or polyurethane resin.

Furthermore, the present method is suitable for recovering fibers of various materials, including carbon fibers, glass fibers, aramid fibers (*e.g.* Kevlar^{™} fibers), extended chain polyethylene fibers (e.g. Spectra^{™}), natural fibers like jute, flax, hemp, remi, sisal, coconut fiber (coir), and banana fiber (abaca), boron fibers and/or ceramic fibers such as silicon carbide (SiC) and aluminum oxide (Al₂O₃) fibers. Good results were obtained for carbon fibers and glass fibers, which are preferred.

In a typical embodiment, the fiber-reinforced thermoset composite material comprises a plurality of fiber lamina that are embedded within or bound together by the resin. Generally, each fiber lamina includes reinforcing fibers arranged in a predetermined orientation and configuration, wherein the thermosetting resin encapsulates and binds said lamina together, thereby forming a rigid, integral structure upon curing. By subjecting the composite to mild HVF, partial delamination can occur, thereby exposing the internal structure of the composite to the solvolysis medium, accelerating the solvolysis process.

The HVF preferably does not disintegrate the lamella individually but rather introduces microcracks and delaminate the composite allowing the solvolysis medium to penetrate the composite. As such, the fibers remain essentially intact and do brake or damage otherwise.

### High voltage fragmentation

HVF has conventionally been used to break rock, see *e.g*. Zhu et al. Rock Mech Rock Eng 54 (2021) 4593-4616. HVF can be carried out on the composite by placing the composite in between two electrodes and discharging a high-voltage electrical energy between these electrodes, *i.e.* providing an electric pulse. The electrical energy at high voltage is discharged rapidly through the composite immersed in a dielectric fluid, generating shockwaves that propagate through the composite and fragment it along internal interfaces, such as phase boundaries.

The HVF is applied under mild conditions, meaning that it does not lead to full disintegration, pulverization or degradation of the composite and concomitant damaging of the fibers. The HVF-treated composite material exhibits fracturing and/or partial delamination, which is characterized by localized separation or cracking between adjacent fibers, fiber lamina or elsewhere within the resin matrix, without substantial disintegration, pulverization, or degradation of the overall structural integrity, in particular without damaging the fibers. The fibers thus remain predominantly intact, maintaining their shape. The treated composite thus typically contains regions of limited internal separation or fracturing resulting from the HVF conditions. Hence, subjecting the fiber-reinforced thermoset composite material to the HVF preferably results in fracturing in essentially only the resin and essentially no fracturing of the fibers. Preferably, the dimensions of the recovered fibers are essentially the same as the fibers present in the composition, meaning that the length and thickness of the fibers remain the same.

The total intensity of the HVF can be set by two parameters: the voltage of each electric pulse and the number of pulses supplied to a given composite object. In a typical embodiment, a pulse has a voltage in the range of 70 to 200 kV, preferably 90 to 130 kV and between 1 and 100 pulses are given. The voltage and number of pulses can be optimize depending on the composition of the composite. For example, a combination of 20 pulses and pulse voltage of 100 kV can be used.

An apparatus that is suitable for carrying out the HVF is for example the SELFRAG Lab system, which is available from Selfrag AG, Switzerland. Advantageously, the SELFRAG Lab system records the total energy transferred to the sample by the pulses.

In preferred embodiments, the amount of energy transferred to the fiber-reinforced thermoset composite material is 1 - 100 Joule cm⁻², more preferably 10 - 80 Joule cm⁻².

The HVF can be applied before, simultaneously, or both before and simultaneously with the solvolysis. Typically, the HVF is carried out in water or another dielectric solvent, whilst the solvolysis is carried out in a reactive solvent, for instance aqueous acid. If the HVF and solvolysis are carried out simultaneously, a solvent is to be selected in which the HVF can be carried out and which solvent is sufficiently reactive to achieve solvolysis.

HVF comprises electrodynamic fragmentation (EDF) and/or electrohydraulic fragmentation (EHF), preferably EDF. EDF is characterized in that the composite is placed in between the electrodes, such that the high-voltage pulses are directly discharged into the composite material which results in that the electrical energy propagating through the material. EHF on the other hand, is an indirect method, wherein the composite is not necessarily placed between the electrodes and wherein the high-voltage pulses are discharged into a liquid (typically water) thereby creating a shockwave in the liquid, which travels to the surface of the composite. EDF is preferred, because is considered to be more efficient and more effective.

Because the HVF does not require full disintegration of the composite but is used to induce microfractures and/or partial delamination only, the energy requirement for the HVF is relatively small. It is known that full fragmentation by HVF of composite materials can be relatively high, *i.e.* higher than HVF of bottom ash, reinforced concrete and/or mineral ores, but since full fragmentation is not required, energy consumption can be kept low-facilitating the commercial realization of the process. In typical embodiments of the present invention, the HVF is carried out with less than 1000 kWh/ton, preferably less than 500 kWh/ton, more preferably less than 100 kWh/ton, even more preferably less than 25 kWh/ton, most preferably less than 10 kWh/ton based on the weight of the composite. The larger the scale of the process, the more energy efficient can be made.

### Solvolysis

The solvolysis at least partially decomposes and dissolves the resin, thereby liberating the fibers, which do essentially not dissolve, from said resin. Solvolysis is the process of using a solvent to decompose a polymer. Dissolution is the dissolving of the decomposed polymer (*i.e.* fractions of the polymer) in the solvent. Decomposition and dissolution often (mostly) happen at the same time, but not necessarily always. Conventional solvolysis methods exist that have been used without the combination with HVF, and the chemistry behind these conventional methods can typically be used for the present invention. Suitable solvolysis conditions can be selected depending on the type of resin.

Solvolysis as described previously can suitably be applied. Most typically, solvolysis comprises chemistry targeting the carbonyl groups present in the resin through e.g. hydrolysis, glycolysis, aminolysis, ammonolysis, acidolysis, and the like. For instance, epoxy resin solvolysis as described in Zhao, Q. et al. (2022), Composites Science and Technology, 224(April), Mu, Q. et al. (2022) Polymer Degradation and Stability, 199, Kuang, X. et al. (2018), RSC Advances, 8(3), pp. 1493-1502, and references cited therein is suitable. Also, solvolysis of mixed plastics as described by Arifuzzaman, M. et al. (2023), Materials Horizons, 10(9), pp. 3360-3368 is applicable. Further, the solvolysis of carbonates such as bisphenol A-based polycarbonate (BPA-PC) as described by Olazabal, I. et al. (2023), Polymer Chemistry, 14(19), pp. 2299-2307 is applicable. Yet further, the solvolysis of polyurethane as described by Gama, N. et al. (2024), Journal of Polymers and the Environment, (28), pp. 4777-4793 and Olazabal, I. et al. (2023), ACS Sustainable Chemistry and Engineering, 11(1), pp. 332-342 can suitably be applied. In addition, the transesterification of ester such as polyethylene terephthalate (PET) as described in Kumar, P. et al. (2024), Journal of Catalysis, 429 (October 2023), p. 115246 can be applied.

For example, composites comprising amine-crosslinked epoxy resins (which are *e.g*. used in blades of wind turbines), can be treated by solvolysis comprising oxidative degradation, as described *i.a.* in Navarro et al., Topics in Catalysis (2018) 61:704-709, and referenced cited therein. Preferably, oxidative degradation comprises using an oxidizing agent such as hydrogen peroxide and an acid such as acetic acid, or oxygen (³O₂ or ¹O₂) in a solution of benzyl alcohol that optionally contains manganese (see *e.g.* US 2022/0363863).

In case the composite comprises anhydride-crosslinked epoxy resins, the solvolysis typically comprises chemistry targeting the carbonyl groups present in the resin, *e.g*. hydrolysis, glycolysis, aminolysis, ammonolysis, acidolysis, and the like. Preferably, the solvolysis of anhydride-crosslinked epoxy resins comprises chemistry that is catalyzed by catalysts such as metal complexes, metal salts, Lewis and/or Bronsted acids and bases, acid/base adducts, deep eutectic solvents etc.

Depolymerization chemistry that is suitable for other polymers containing carbonyl moieties such as PET and polyamide (PA), as well as the chemistry for resins containing carbonyl moieties, can often be made suitable for unsaturated polyester resins.

In case the composite comprises polyurethane resins, the solvolysis comprises chemistry targeting the carbonyl groups present in the resin, *e.g*. hydrolysis, glycolysis, aminolysis, ammonolysis, acidolysis, and the like. The solvolysis comprises chemistry that is catalyzed by catalysts comprising metal complexes, metal salts, Lewis and/or Bronsted acids and bases, acid/base adducts, deep eutectic solvents *etc.* Depolymerization chemistry that is suitable for other polymers containing carbonyl moieties such as PET and polyamide (PA), as well as the chemistry for resins containing carbonyl moieties, can often be made suitable for unsaturated polyester resins.

In case the composite comprises vinyl ester resins, the solvolysis typically comprises chemistry targeting the carbonyl groups present in the resin, *e.g*. hydrolysis, glycolysis, aminolysis, ammonolysis, acidolysis, and the like. The solvolysis preferably comprises chemistry that is catalyzed by catalysts comprising metal complexes, metal salts, Lewis and/or Bronsted acids and bases, acid/base adducts, deep eutectic solvents etc. The chemistry preferably comprises the use of co-reactants such as potassium tert-butoxide (KOtBu) to sequester catalyst poisons. Depolymerization chemistry that is suitable for other polymers containing carbonyl moieties such as PET and polyamide (PA), as well as the chemistry for resins containing carbonyl moieties, can often be made suitable for vinyl ester resins resins.

In case the composite comprises polyimide resins such as bismaleimide resins, the solvolysis typically comprises chemistry targeting the carbonyl groups present in the resin, *e.g*. hydrolysis, glycolysis, aminolysis, ammonolysis, acidolysis, and the like. The solvolysis comprises chemistry that is catalyzed by catalysts comprising metal complexes, metal salts, Lewis and/or Bronsted acids and bases, acid/base adducts, deep eutectic solvents *etc.* The chemistry comprises the use of co-reactants such as potassium tert-butoxide (KOtBu) to sequester catalyst poisons. Depolymerization chemistry that is suitable for other polymers containing carbonyl moieties such as PET and polyamide (PA), as well as the chemistry for resins containing carbonyl moieties, can often be made suitable for polyimide resins.

In case the composite comprises polyester resins such as unsaturated polyester resins, the solvolysis typically comprises chemistry targeting the carbonyl groups present in the resin, *e.g*. hydrolysis, glycolysis, aminolysis, ammonolysis, acidolysis, and the like. The solvolysis comprises chemistry that is catalyzed by catalysts comprising metal complexes, metal salts, Lewis and Bronsted acids and bases, acid/base adducts, deep eutectic solvents etc. The chemistry comprises the use of co-reactants such as potassium tert-butoxide (KOtBu) to sequester catalyst poisons. Depolymerization chemistry that is suitable for other polymers containing carbonyl moieties such as PET and polyamide (PA), as well as the chemistry for resins containing carbonyl moieties, can often be made suitable for polyester resins.

As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features.

### EXAMPLES

The invention can be illustrated by the following non-limiting examples.

### Example 1 - HVF optimization for glass fiber reinforced composites

Glass fiber reinforced composites modelled on typical wind turbine blade composition were tested in a SELFRAG Lab 2.1, which is available from Selfrag AG, Switzerland. The energy and electric pulses were varied as shown in Table 1.

**Table 1**

| **sample id** | **Energy [kV]** | **Pulses** |
|---|---|---|
| A | 90 | 100 |
| B | 100 | 100 |
| C | 110 | 100 |
| D | 130 | 100 |
| E | 150 | 100 |

The results are shown in Figure 1 and show that an increase in the voltage results in more fragmentation. While the samples exposed to 90 and 100 kV remained structurally intact, the samples do show some delamination.

In contrast, the samples exposed to 110 and 130 kV fall apart to larger fragments, and at 150 kV formation of loose fibers and fine particles can be observed, as well as charring of the sample. These samples are degraded too much, and the fibers were damaged.

Further experiments were carried out, wherein the energy and electric pulses were varied as shown in Table 2.

**Table 2**

| **sample id** | **Energy [kV]** | **Pulses** |
|---|---|---|
| H | 100 | 100 |
| I | 110 | 100 |
| J | 130 | 100 |
| K | 130 | 100 |
| I | 150 | 100 |
| M | 130 | 50 |
| N | 130 | 200 |
| U | 130 | 10 |
| V | 130 | 25 |

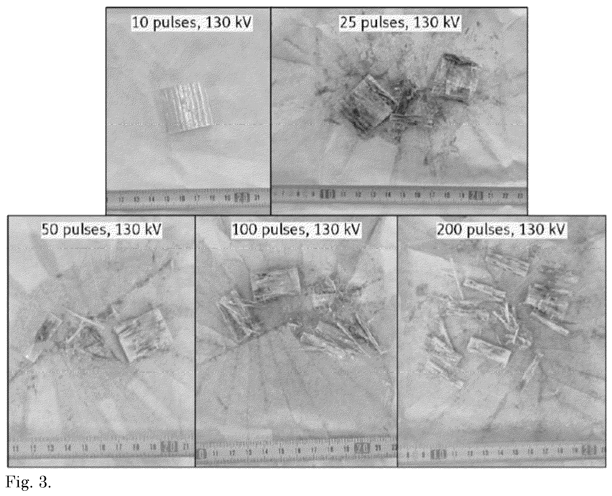

Results are shown in Figures 2 and 3.

Figure 2 shows, from left to right, a virgin sample, and samples B, H, and U after treatment.

The samples exposed to 100 pulses at 90 and 100 kV (sample B and H, respectively), and the samples exposed to only 10 pulses at 130 kV (sample U) stayed mostly intact, but did show some delamination at at least the edges of the composite. Especially sample H shows some delamination without resulting in too much fragmentation.

Figure 3 shows that the number of pulses also have a significant effect on the degree of fragmentation. With 10 pulses at 130 kV the sample remains structurally intact, but some delamination can be observed. At the same voltage, from 25 pulses the formation of fragments can be observed, and from 100 pulses the formation of smaller particles and loose fibers.

### Example 2 - HVF and solvolysis

To assess the effect of EDF on the speed of solvolysis, representative samples were solvolyzed using the: 100 mL AcOH, 10 mL 35% H₂O₂, 60 minutes, 90 °C. As shown in Table 3, the weight of most samples increases during solvolysis, which is likely the result of AcOH cleaving the resin network and bonding to the newly formed compounds.

**Table 3**

| **sample id** | **Energy [kV]** | **Pulses** |
|---|---|---|
| B | 90 | 100 |
| H | 100 | 100 |
| I | 110 | 100 |
| J | 130 | 100 |
| K | 130 | 100 |
| M | 130 | 50 |
| U | 130 | 10 |
| V | 130 | 25 |
| S | 110 | 100 |
| T | 110 | 100 |

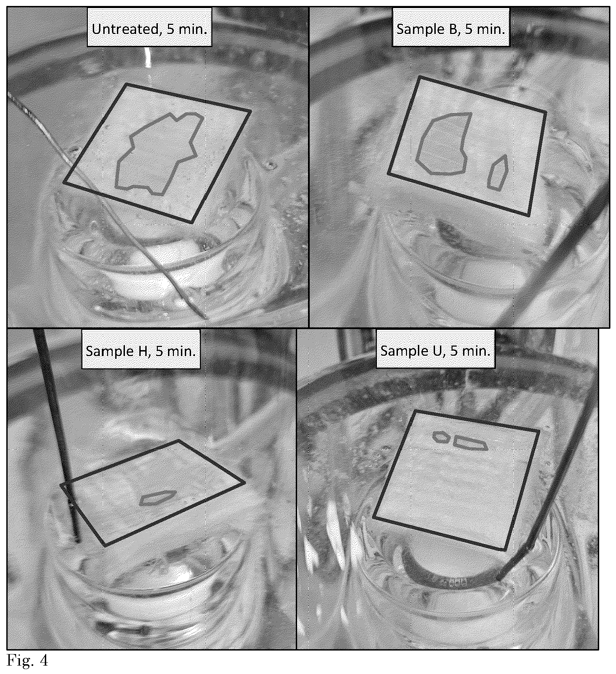

Three samples, B, H, and U of Example 1 that did not disintegrate too much, show accelerated swelling during the solvolysis, as detailed in Table 4 and Figure 4. This confirmed the delamination observed in Figure 2.

**Table 4**

| **sample id** | **Part of sample remaining unswollen (%)** |
|---|---|
| Untreated | 26% |
| B | 21% |
| H | 2% |
| U | 3% |

## Claims

1. A method for recovering fibers from a fiber-reinforced thermoset composite material that comprises resin and fibers, said method comprising:
- subjecting the fiber-reinforced thermoset composite material to a high voltage fragmentation (HVF) to microfracture the fiber-reinforced thermoset composite material and obtain a microfractured fiber-reinforced thermoset composite; and
- subjecting the microfractured fiber-reinforced thermoset composite to solvolysis to at least partially dissolve the resin and liberate the fibers from said resin.

2. The method according to claim 1, wherein the HVF comprises electrodynamic fragmentation (EDF) and/or electrohydraulic fragmentation (EHF), preferably EDF.

3. The method according to any one of the previous claims, wherein the resin comprises an epoxy resin, a polyurethane resin, a carbonate resin, a vinyl ester resin, an unsaturated polyester resin, or combinations thereof, and/or wherein the fibers comprise carbon fibers and/or glass fibers.

4. The method according to any one of the previous claims, wherein the HVF is carried out by applying between 1 and 100 pulses, which each pulse independently has a pulse voltage in the range of 70 to 200 kV, preferably 90 to 130 kV.

5. The method according to any one of the previous claims, wherein the high voltage fragmentation (HVF) transfers an amount of energy to the fiber-reinforced thermoset composite material in the range of 1 - 100 Joule cm⁻², more preferably 10 - 80 Joule cm⁻².

6. The method according to any one of the previous claims, wherein the solvolysis comprises hydrolysis, glycolysis, aminolysis, ammonolysis, acidolysis or combinations thereof.

7. The method according to any one of the previous claims, wherein the resin comprises an epoxy resin and the solvolysis comprises oxidative degradation, preferably oxidative degradation using an oxidizing agent such as hydrogen peroxide and an acid such as acetic acid.

8. The method according to any one of the previous claims, wherein the fiber-reinforced thermoset composite material comprises a plurality of fiber-woven lamina that are embedded within the resin.

9. The method according to the previous claim, wherein subjecting the fiber-reinforced thermoset composite material to the HVF results in a partially delaminated fiber-reinforced thermoset composite.

10. The method according to any one of the previous claims, wherein subjecting the fiber-reinforced thermoset composite material to the HVF results in fracturing in essentially only the resin and essentially no fracturing of the fibers.
